(19)

Europäisches
Patentamt
European
Patent Office
Office européen
des brevets

(11) **EP 2 348 701 A2**

(12) **EUROPEAN PATENT APPLICATION**

(43) Date of publication:
  **27.07.2011 Bulletin 2011/30**

(51) Int Cl.:
  **H04N 1/40** *(2006.01)*    **H04N 1/409** *(2006.01)*

(21) Application number: **11151710.8**

(22) Date of filing: **21.01.2011**

(84) Designated Contracting States:
  **AL AT BE BG CH CY CZ DE DK EE ES FI FR GB GR HR HU IE IS IT LI LT LU LV MC MK MT NL NO PL PT RO RS SE SI SK SM TR**
  Designated Extension States:
  **BA ME**

(30) Priority: **22.01.2010 JP 2010012581**

(71) Applicant: **Canon Kabushiki Kaisha Tokyo 146-8501 (JP)**

(72) Inventor: **Okutsu, Toshihisa Ohta-ku Tokyo (JP)**

(74) Representative: **Garner, Jonathan Charles Stapleton Canon Europe Ltd European Patent Department 3 The Square Stockley Park Uxbridge, Middlesex UB11 1ET (GB)**

(54) **Image reading apparatus, control method thereof, program and storage medium**

(57)    An image reading apparatus (140, 120) of the present invention, which reads an automatically conveyed document at a set reading resolution and outputs image data of the document, comprises image reading means (140) for performing a reading operation and for outputting image data with a resolution corresponding to the reading resolution in accordance with reflected light, conversion means (2413) for, in a case that the reading resolution is higher than a resolution for abnormal pixel detection, converting image data with a resolution corresponding to the reading resolution into image data with the resolution for abnormal pixel detection, detection means (2450) for detecting an abnormal pixel in accordance with the image data converted by the conversion means (2413), and correction means (2411) for correcting a pixel of pixels included in the image data of the document read by the image reading means (140), which corresponds to a position of an abnormal pixel detected by the detection means (2450).

**FIG. 10**

```
            START
              │
              ▼         S100
   ┌─────────────────────┐
   │  ACQUIRE DOCUMENT   │
   │     RESOLUTION      │
   │ AND DUST DETECTABLE │
   │     RESOLUTION      │
   └─────────────────────┘
              │
              ▼         S101
           ◇ IS ◇
        DOCUMENT              YES
  RESOLUTION HIGHER THAN DUST ─────┐
    DETECTABLE RESOLUTION          │
           ?                       │
            │ NO                   │
            ▼      S102            ▼      S103
   ┌─────────────────┐   ┌─────────────────┐
   │ CLEAR DUST      │   │ SET DUST        │
   │ DETECTION       │   │ DETECTION       │
   │ RESOLUTION      │   │ RESOLUTION      │
   │ CHANGE FLAG     │   │ CHANGE FLAG     │
   │ TO false        │   │ TO true         │
   └─────────────────┘   └─────────────────┘
            │                     │
            ▼─────────────────────┘
   ┌─────────────────┐  S104
   │ DUST DETECTION  │
   │ PROCESSING      │
   │ BASED ON DUST   │
   │ DETECTION       │
   │ RESOLUTION      │
   │ CHANGE FLAG     │
   └─────────────────┘
            │
            ▼      S105
   ┌─────────────────┐
   │ CLEAR DUST      │
   │ DETECTION       │
   │ RESOLUTION      │
   │ CHANGE FLAG     │
   │ TO false        │
   └─────────────────┘
            │
            ▼      S106
   ┌─────────────────┐
   │ PERFORM         │
   │ DOCUMENT        │
   │ READING         │
   │ PROCESSING      │
   │ WITH DOCUMENT   │
   │ RESOLUTION      │
   └─────────────────┘
            │
            ▼
           END
```

EP 2 348 701 A2

# Description

## BACKGROUND OF THE INVENTION

### Field of the Invention

The present invention relates to an image reading apparatus which reads an image on a document, a control method for the image reading apparatus, a program, and a storage medium.

### Description of the Related Art

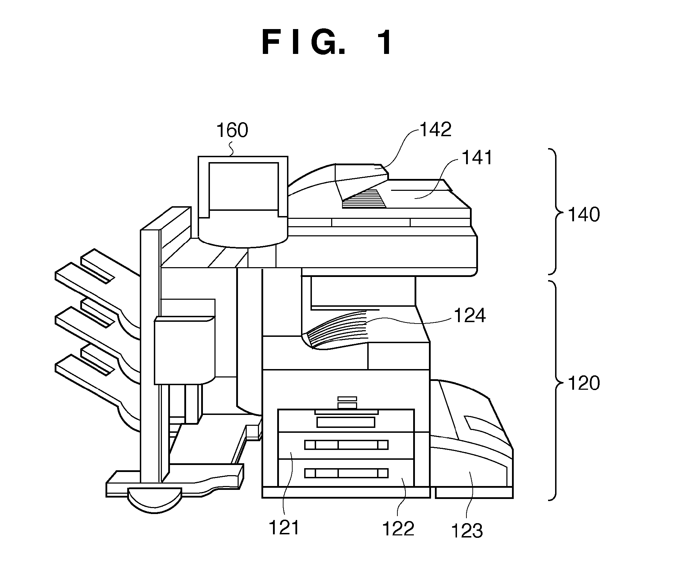

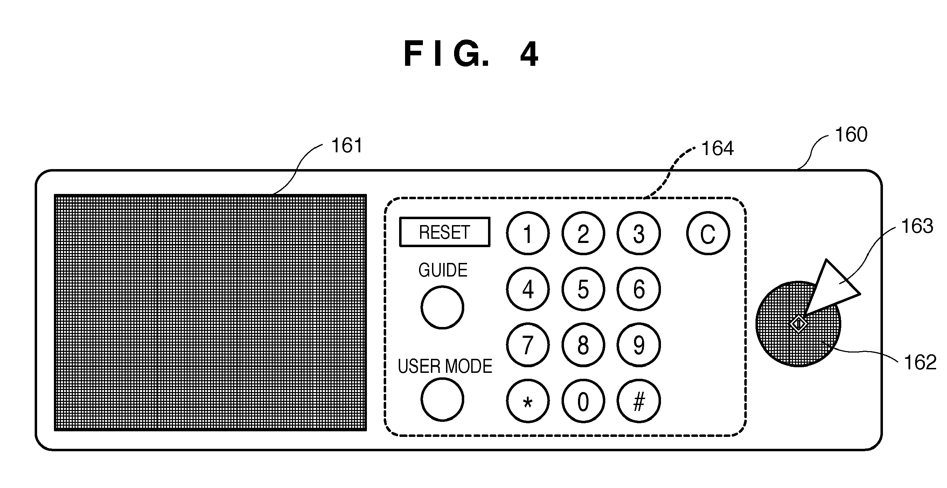

Conventionally, there is available an image reading apparatus which reads a document by automatically conveying a plurality of document sheets set on an automatic document feeder (ADF) one by one. This reading method is called the "flow scanning mode". In the flow scanning mode, this apparatus reads an automatically conveyed document by using a reading optical system device fixed at the document reading position. In this flow scanning mode, when a foreign substance such as dust, flaw, stain, or dust particle exists at the document reading position, since the position of the reading optical system device is fixed, the device keeps reading the same foreign substance. As a consequence, an abnormal pixel group in a linear shape (black streak) sometimes appears on a read image. That is, a foreign substance such as dust, dust particle, flaw, or stain existing at the document reading position becomes the cause of a black streak on a read image. As a technique for preventing the occurrence of such a black streak, there is known a technique of making a black streak less noticeable by detecting a foreign substance existing at the document reading position and correcting the generated black streak (see, for example, Japanese Patent Laid-Open No. 2002-185725 (reference 1: p. 7 and Fig. 4, in particular). This technique detects dust by reading the white surface of an automatic document feeder belt, storing the average density of the read surface in a line memory, and comparing it with a threshold. There is also available a technique of performing dust detection processing with the resolution based on the accuracy of dust detection processing which is designated by a user (see, for example, Japanese Patent Laid-Open No. 2005-269353 (reference 2: p. 7 and Fig. 1, in particular).

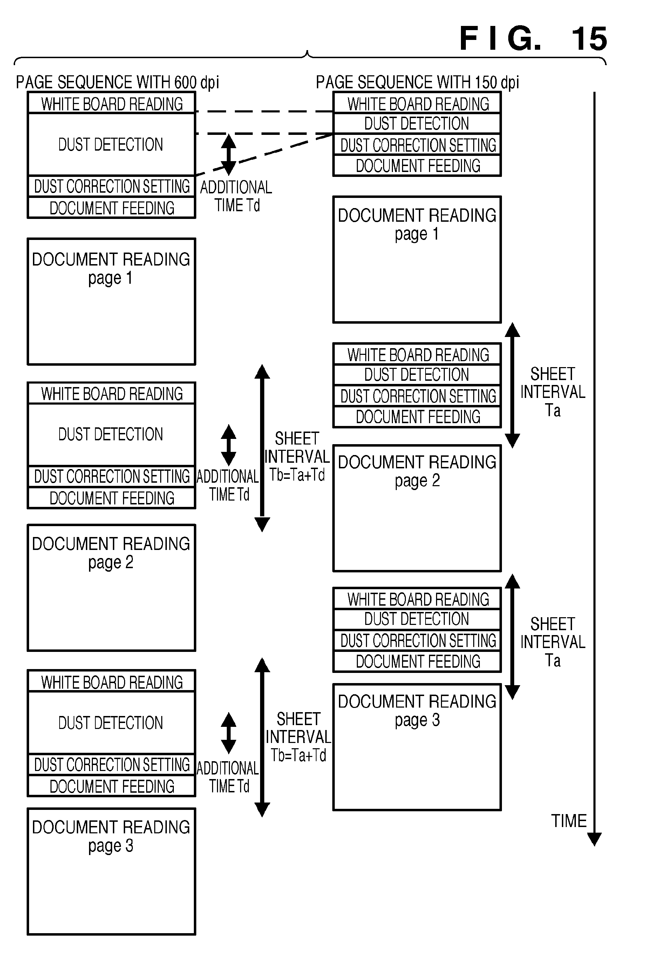

According to the above conventional technique, however, the data amount required for dust detection processing changes in accordance with the resolution setting of document reading or the accuracy setting of foreign substance detection processing. That is, when the user designates a high accuracy for foreign substance detection processing, the number of pixels of the foreign substance detection target becomes large, resulting in a long processing time. In foreign substance detection processing, for example, the white surface of an automatic document feeder belt or the like is read before document image reading, and the read image is set as a processing target. For this reason, as the time required for foreign substance detection processing increases, the sheet conveying interval increases, resulting in a decrease in the throughput of copying processing. Fig. 15 shows a specific example of such throughput decrease. The time required for foreign substance detection processing with an initial low resolution of 150 dpi increases by Td if the resolution is increased to 600 dpi. Accordingly, it is necessary to increase the time required for conveying each sheet by Td.

## SUMMARY OF THE INVENTION

The present invention has been made in consideration of the above problems, and provides a mechanism of shortening the time required to detect an abnormal pixel caused by the influence of a foreign substance, regardless of a document reading resolution setting.

The present invention in its first aspect provides an image reading apparatus as specified in claims 1 to 6.

The present invention in its second aspect provides a control method for an image reading apparatus as specified in claim 7.

The present invention in its third aspect provides a program as specified in claim 8.

The present invention can provide a mechanism of shortening the time required to detect an abnormal pixel caused by the influence of a foreign substance, regardless of a document reading resolution setting.

Further features of the present invention will become apparent from the following description of exemplary embodiments with reference to the attached drawings.

## BRIEF DESCRIPTION OF THE DRAWINGS

Fig. 1 is a view showing the arrangement of a copying machine according to the first embodiment of the present invention;

Fig. 2 is a view showing the arrangement of a scanner unit and its operation procedure;

Fig. 3 is a block diagram showing the arrangement of a controller;

Fig. 4 is a view showing the arrangement of an operation unit;

Fig. 5 is a block diagram showing the arrangement of a scanner IF image processing unit;

Fig. 6 is a block diagram showing the arrangement of a dust detection unit;

Fig. 7 shows binarization processing using a binarization slice level and dust determination processing using a dust determination level;

Fig. 8 is a view for explaining an example of interpolation computation for correcting a black streak;

Fig. 9 is a view showing an image with a black streak;

Fig. 10 is a flowchart showing an overall processing procedure for dust detection processing and document reading processing;

Figs. 11A and 11B are flowcharts showing a detailed processing procedure for dust detection processing (S104);

Fig. 12 is a block diagram showing the arrangement of a scanner IF image processing unit according to the second embodiment of the present invention;

Fig. 13 is a flowchart showing a processing procedure for dust detection processing and document reading processing;

Fig. 14 is a view showing the sequence of paper conveyance processing; and

Fig. 15 is a view showing a sequence for paper conveyance processing according to a conventional image reading apparatus.

DESCRIPTION OF THE EMBODIMENTS

The embodiments of the present invention will be described in detail below with reference to the accompanying drawings. Note that the following embodiments do not limit the appended claims of the present invention, and all the combinations of the features described in the embodiments are not necessarily essential to the means for solving the problems in the present invention.

<First Embodiment>

[Overall Arrangement of Copying Machine (Fig. 1)]

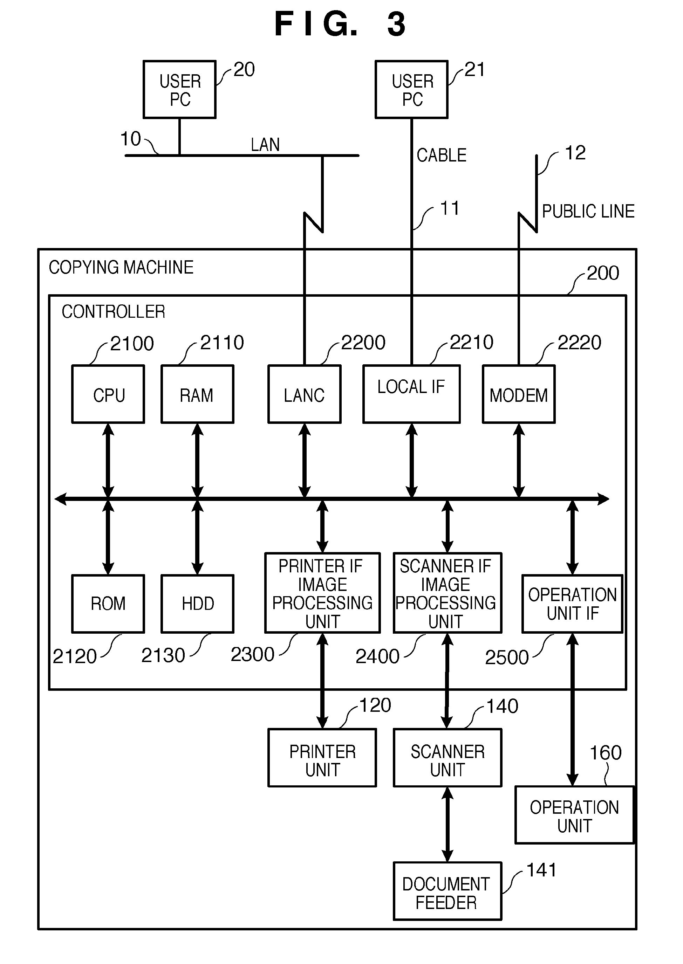

The copying machine includes a scanner unit 140 (image reading apparatus) as an image input device and a printer unit 120 as an image output device. The copying machine includes a controller 200 (Fig. 3) to control the scanner unit 140, the printer unit 120 and an operation unit 160 which accepts operations input by the user.

The scanner unit 140 converts image information into an electrical signal by inputting the reflected light obtained by exposing/scanning an image on a document with light emitted from an illumination lamp to a linear image sensor (CCD sensor). The scanner unit 140 further converts the electrical signal into a luminance signal composed of R, G, and B components, and outputs the luminance signal as image data to the controller 200 (to be described later). A document is set on a tray 142 of a document feeder 141. When the user issues an instruction to start reading from the operation unit 160, the controller 200 sends a document reading instruction to the scanner unit 140. Upon receiving this instruction, the scanner unit 140 automatically feeds document sheets one by one from the tray 142 of the document feeder 141 (document conveying means) and reads each sheet. The document feeder 141 is also called an automatic document feeder (ADF), and allows the reading of one document sheet or multiple consecutive document sheets. Alternatively, a document can be fed by placing it on the platen glass (to be described later).

The printer unit 120 is an image forming device which forms image data received from the controller 200 on a paper sheet. The image forming method according to the first embodiment is the electrophotographic method using a photosensitive drum or a photosensitive belt. The printer unit 120 includes a plurality of paper cassettes 121, 122, and 123 which can cope with different paper sizes and different paper directions. A delivery tray 124 delivers a paper sheet after printing.

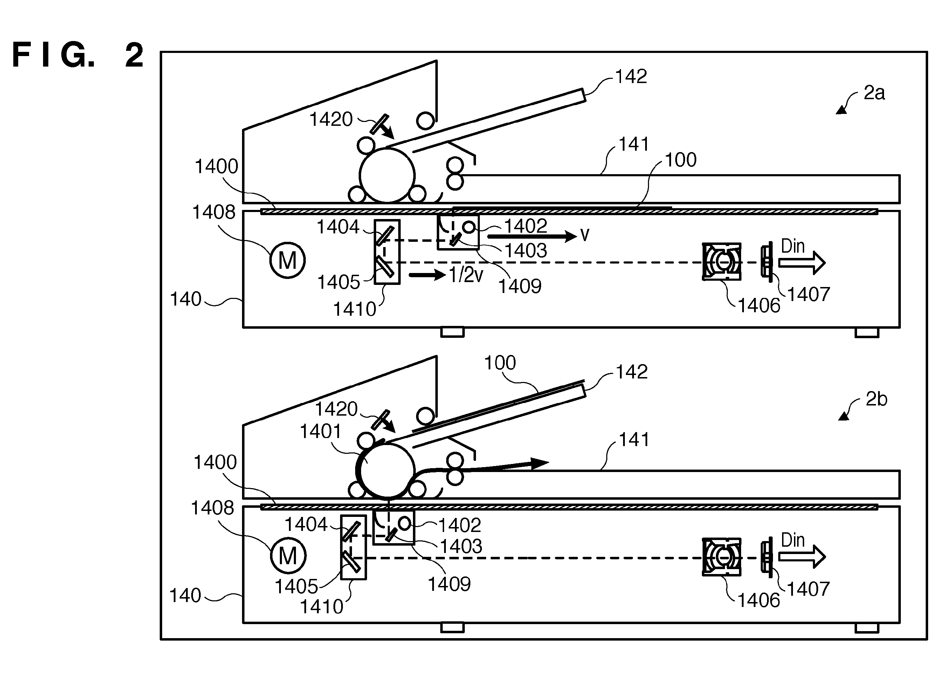

[Detailed Arrangement and Reading Operation of Scanner Unit (Fig. 2)]

The scanner unit 140 has a normal mode of placing a document on a platen glass 1400 and reading the document by moving a CCD sensor 1407 in the sub-scanning direction. The scanner unit 140 also has a flow scanning mode that reads a document by causing the document feeder 141 to operate such that the document is conveyed in the sub-scanning direction. The scanner unit 140 can operate upon selecting one of the two types of reading modes.

In Fig. 2, 2a shows reading operation in the normal mode. A document 100 to be read is placed on the platen glass 1400. An illumination lamp 1402 (light source) irradiates the document 100 with light. A lens 1406 forms the reflected light into an image on the CCD sensor 1407 (image reading means) through mirrors 1403, 1404, and 1405. A first mirror unit 1409 including the mirror 1403 and the illumination lamp 1402 moves at a velocity v, and a second mirror unit 1410 including the mirrors 1404 and 1405 moves at a velocity of v/2, thereby scanning the obverse surface of the document 100. A motor 1408 drives the first mirror unit 1409 and the second mirror unit 1410. The reflected light input to the CCD sensor 1407 is converted into an electrical signal. An A/D converter converts the electrical signal of each pixel into digital data (pixel value), which is input as a pixel signal Din to the controller 200. The CCD sensor 1407 can select one of three levels of reading mode (600 dpi, 300 dpi, and 150 dpi).

In Fig. 2, 2b shows reading operation in the flow scanning mode. The document 100 to be read is placed on the tray 142. In this flow scanning mode, the driving roller 1401 conveys each document sheet from the tray 142 at a constant velocity in the direction indicated by the arrow shown in 2b of Fig. 2, making the page pass across the surface of the platen glass 1400. In the flow scanning mode, optical systems such as the first mirror unit 1409 and the second mirror unit 1410 do not move, and each document sheet is read from a fixed position. In this flow scanning mode, since it is only necessary to move each document sheet in a single predetermined direction, it is possible to consecutively read a large number of document sheets at a high speed. A document sensor 1420 detects the leading edge position and trailing edge position of a moving document. In the flow scanning mode, since the apparatus reads images by moving document sheets, it is possible to specify the position information of a sheet document from the angle at which the driving roller is at when the document has been detected, having reached the reading sensor position, before it is made to rotate.

[Detailed Arrangement of Controller (Fig. 3)]

The controller 200 is connected to the scanner unit 140, the printer unit 120, the operation unit 160, a LAN 10, a public line (WAN) 12, and the like to comprehensively control the operation of the copying machine and perform input/output control of image information and device information.

A CPU 2100 is a processor to control the overall copying machine, and comprehensively controls accesses to various connected devices based on control programs and the like stored in a ROM 2120. The CPU 2100 also comprehensively controls various kinds of processing performed inside the controller 200.

A RAM 2110 is a system work memory and also an image memory to temporarily store image data, data required for dust detection processing (to be described later), and the like. The ROM 2120 is a boot ROM and stores the boot program of the system. An HDD 2130 is a hard disk drive, which mainly stores information (system software) necessary for the startup and operation of the computer and processing of image data. These data may be stored in a recording medium which can retain the stored information even when not powered (for example, a flash memory) instead of the HDD 2130.

A LANC (LAN Controller) 2200 connects to the LAN 10 to input/output output image data and information associated with device control to/from a user PC 20. A local IF (local interface) 2210 is an interface such as a USB or Centronics interface, which is connected to a user PC 21 and the printer unit 120 via a cable 11 to input/output data. A MODEM 2220 is connected to the public line 12 to input/output data.

A printer IF image processing unit 2300 is connected to the printer unit 120 to communicate with the CPU mounted in the printer unit 120. The printer IF image processing unit 2300 performs image processing for synchronous/asynchronous conversion of image data and print output. A scanner IF image processing unit 2400 is connected to the scanner unit 140 to communicate with the CPU mounted in the scanner unit 140. The scanner IF image processing unit 2400 also performs synchronous/asynchronous conversion of image data and image processing such as dust detection processing and dust correction processing (to be described later). An operation unit IF 2500 is an interface to output image data to be displayed on the operation unit 160 from the controller 200 to the operation unit 160 and output the information input from the operation unit 160 by the user of the copying machine to the controller 200.

[Detailed Arrangement of Operation Unit (Fig. 4)]

A liquid crystal operation panel 161 is a combination of a liquid crystal display and a touch panel. The liquid crystal operation panel 161 displays an operation window. In addition, when the user presses a displayed key, this panel sends corresponding information to the controller 200. A start key 162 is used to start the operation of reading and printing a document image or start other functions. The start key incorporates green and red LEDs. When green light glows, it indicates that the corresponding function can be started. When red light glows, it indicates that the corresponding function cannot be started. A stop key 163 functions to stop the ongoing operation. A hard key group 164 includes a ten-key pad, clear key, reset key, guide key, and user mode key.

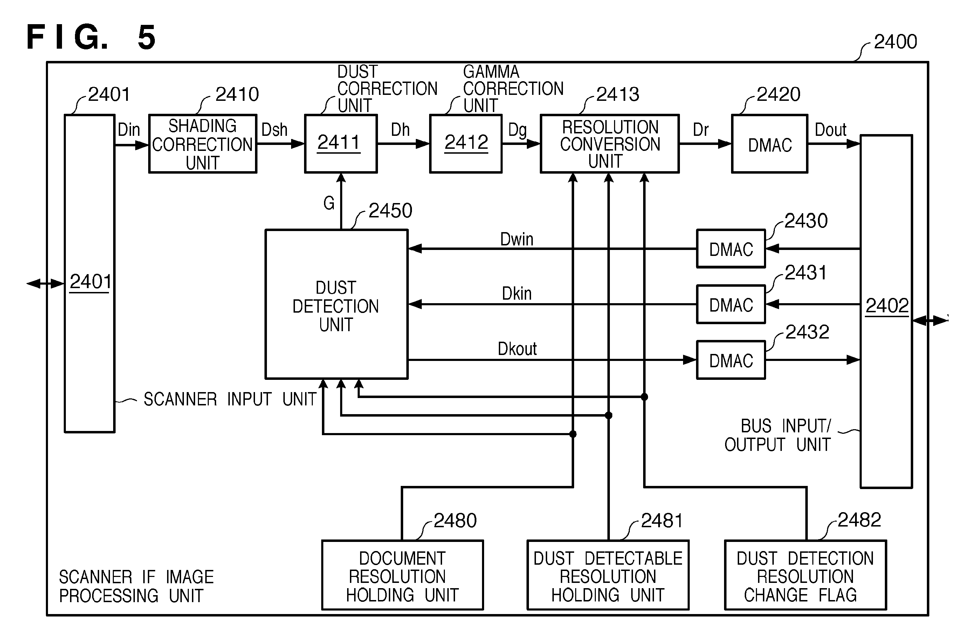

[Detailed Arrangement of Scanner IF Image Processing Unit (Fig. 5)]

As described above, in the flow scanning mode shown in 2b of Fig. 2, the causes of black streaks include foreign substances (adhering substances) such as dust, dust particles, flaws, and stains which exist at the document reading position, which corresponds to the optical system fixed position. The following is a case in which dust is the cause of a black streak. However, the first embodiment can be applied to a case in which a cause of a black streak is something other than dust.

A shading correction unit 2410 receives the pixel signal Din (see Fig. 2) output from the scanner unit 140 and received by a scanner input unit 2401. The shading correction unit 2410 performs correction processing for luminance irregularities due to the characteristics of an optical system and image capturing system by using a known technique so as to obtain an image with uniform brightness. The shading correction unit 2410 outputs a pixel signal Dsh, having undergone shading correction processing, to the subsequent stage.

When dust which is cause of a black streak adheres at the document reading position, a dust correction unit 2411 acquires the position information of the adhered dust from a dust detection unit 2450 (to be described later), and performs correction processing for making the black streak generated on the read image by the dust less noticeable. More specifically, the dust correction unit 2411 performs correction processing for the black streak by using normal pixels surrounding the black streak. Pixel signals in a black streak will be referred to as abnormal pixels hereinafter. Note that a detailed correction method for dust correction processing will be described later. A pixel signal Dh having undergone dust correction processing is output to the subsequent stage. A gamma correction unit 2412 corrects differences in color characteristics between reading elements and a device using a known technique. A pixel signal Dg having undergone gamma correction processing is output to the subsequent stage.

A resolution conversion unit 2413 (resolution conversion means) performs resolution conversion of an input image. An image signal Dr having undergone resolution conversion processing is output to the subsequent stage. The resolution conversion unit 2413 is configured to perform resolution conversion in accordance with the state of a dust detection resolution change flag 2482 (to be described later).

When dust which is the cause of a black streak adheres at the document reading position, the dust detection unit 2450 detects the position of the adhered dust. The dust detection unit 2450 transfers the position information G of the detected dust to the dust correction unit 2411, which in turn uses the information to specify a correction range (black streak portion) when an image having a black streak is actually input. Note that the dust detection unit 2450 in the first embodiment holds no line memory inside, and needs to exchange data with the image memory (RAM 2110) for dust detection. In addition, the dust detection unit 2450 is configured to change the resolution for the execution of dust detection processing in accordance with the state of the dust detection resolution change flag 2482 (to be described later).

DMACs 2420, 2430, 2431, and 2432 are DMA (Direct Memory Access) Controllers, which allow connected modules to write and read data in and from designated areas in the image memory (RAM 2110). The DMAC 2420 (first data transfer control means) writes output data from the resolution conversion unit 2413 in the image memory.

The DMACs 2430 and 2431 read input data to be processed by the dust detection unit 2450 from the image memory. Reference symbol Dwin denotes data input from the DMAC 2430 to the dust detection unit 2450; and Dkin, data input from the DMAC 2431. The DMAC 2432 causes the dust detection unit 2450 to write data as a processing result in the image memory. Reference symbol Dkout denotes data output from the dust detection unit 2450 to the DMAC 2432. The data Dwin, Dkin, and Dkout will be described later as detailed information about the dust detection unit.

A document resolution holding unit 2480 holds a reading resolution for reading reflected light in a state in which a document is conveyed on an optical path irradiated with light from the light source or reflected light in a state in which a document is not conveyed on an optical path irradiated with light from the light source. That is, the first reflected light is the light reflected by a document and a portion other than the document (for example, the white surface on a driving roller 1401 (to be described later)), and the second reflected light is the light reflected only by a portion other than the document. Assume that one of three-level reading resolutions (600 dpi, 300 dpi, and 150 dpi) is set and held in the document resolution holding unit 2480. In this case, the apparatus reads a document in accordance with the setting in this holding unit.

A dust detectable resolution holding unit 2481 is a holding unit for holding a resolution for dust detection. The dust detectable resolution holding unit 2481 holds a resolution that allows the dust detection unit 2450 to detect dust within the time corresponding to the sheet conveying interval. That is, the dust detectable resolution holding unit 2481 holds a resolution for abnormal pixel detection (foreign substance detection) for the detection of an abnormal pixel included in the non-document image data obtained by reading reflected light in a state in which no document is conveyed on the optical path irradiated with light from the light source. Consider, for example, a resolution of 300 dpi. In this case, the dust detectable resolution holding unit 2481 is configured to hold a numerical value representing 300 dpi as long as the dust detection unit 2450 can perform dust detection processing within the time corresponding to the sheet conveying interval.

A dust detection resolution change flag 2482 is a flag instructing whether to change the dust detection resolution from the document resolution. If the flag is false, the dust detection unit 2450 performs dust detection processing at the resolution held in the document resolution holding unit 2480. If the flag is true, the dust detection unit 2450 performs dust detection processing at the resolution held in the dust detectable resolution holding unit 2481. Setting conditions for the flag will be described later with reference to a flowchart.

The scanner IF image processing unit 2400 inputs and outputs data to and from the internal bus of the controller 200 via a bus input/output unit 2402. More specifically, the CPU 2100 performs internal setting for the scanner IF image processing unit 2400, issuance of a startup instruction, and input/output operation with the image memory via the bus input/output unit 2402 using DMACs.

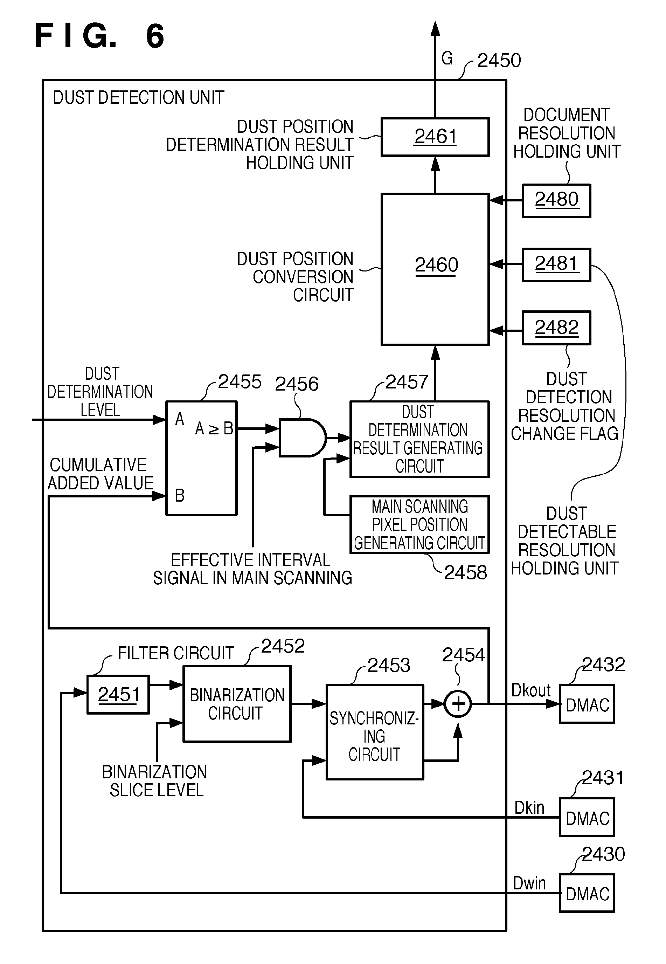

[Detailed Arrangement and Operation of Dust Detection Unit (Fig. 6)]

Reference numeral 2451 denotes a filter circuit; 2452, a binarization circuit; 2453, a synchronizing circuit; 2454, an adding circuit; 2455, a comparator; 2456, an AND circuit; 2457, a dust determination result generating circuit; 2458, a main scanning pixel position generating circuit; 2460, a dust position conversion circuit; and 2461, a dust position determination result holding unit.

The dust detection unit 2450 operates upon receiving the result Dwin obtained by storing, in the image memory, the pixel signal (white board pixel signal) obtained by reading the white surface on the driving roller 1401 at the start of a reading job using the document feeder 141 or in the sheet conveying interval (the interval between reading of a plurality of document sheets).

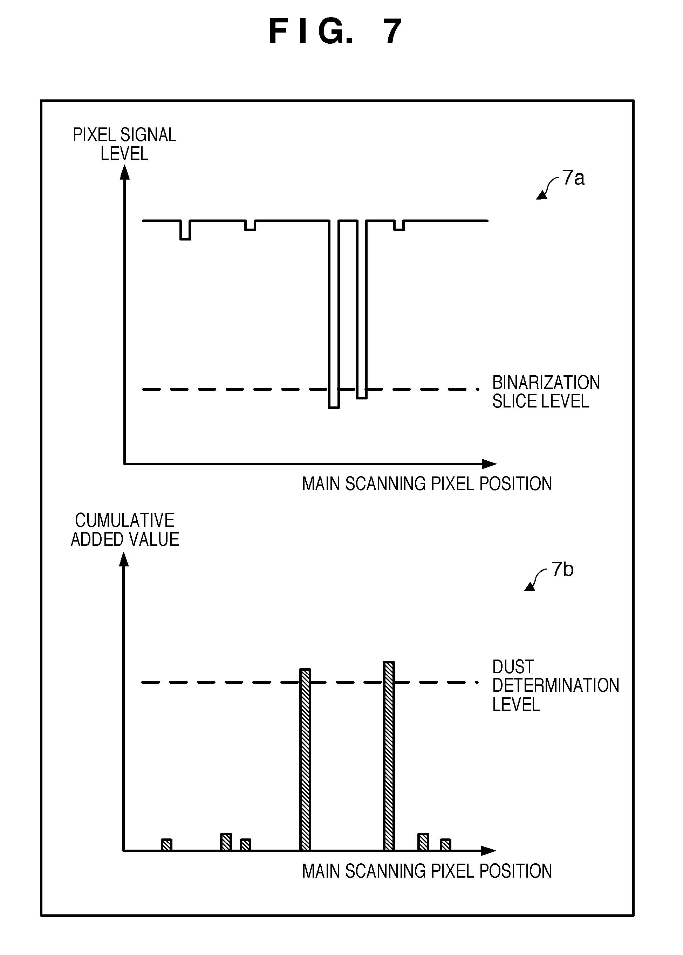

The filter circuit 2451 performs preprocessing for facilitating detection of the influence of dust by, for example, enhancing highfrequency components relative to the white board pixel signal Dwin input from the image memory. In addition, the binarization circuit 2452 binarizes the pixel signal by comparison with a predetermined binarization slice level. In Fig. 7, 7a shows how this binarization is performed. If dust adheres to the white surface and affects a pixel signal, the binarization result exhibits "1" (exceeding the binarization slice level) for almost every line at about the same position in the main scanning direction.

In this case, the dust detection unit 2450 includes the binarization circuit to binarize non-document image data. However, whether to provide a binarization circuit may be determined in accordance with the data size of image data to be processed. That is, this arrangement is not essential to the present invention. Furthermore, quantization to be performed is not limited to binarization. That is, the present invention may include a quantization circuit to quantize signals into a plurality of pixel levels equal to or more than three levels.

Thereafter, the adding circuit 2454 cumulatively adds binarization results corresponding to a predetermined number of lines for each pixel at the same position in the main scanning direction. In this case, it is necessary to store a cumulative added value until the previous line to execute cumulative addition corresponding to a plurality of lines. The first embodiment is therefore configured to allow the dust detection unit 2450 to output a cumulative added value until present time as the data Dkout to the DMAC 2432. That is, the DMAC 2432 writes the data Dkout as data in a designated area in the image memory (RAM 2110), thereby storing the cumulative added value. The designated area indicates a free space in the image memory (RAM 2110) which is not used at the start of a reading job or in the sheet conveying interval (the interval between the reading of a multiple document sheets). The DMAC 2431 reads the cumulative added value until the previous line stored in the image memory (RAM 2110). The dust detection unit 2450 receives this value as the data Dkin. The data Dkin input to the dust detection unit 2450 is input to the synchronizing circuit 2453.

In synchronism with the timing at which a binarized pixel signal is input, the synchronizing circuit 2453 receives the pixel signal and the data Dkin of the cumulative added value at the same position in the main scanning direction, and simultaneously outputs both the data to the adding circuit 2454. Repeating this operation can calculate a cumulative added value corresponding to the required number of lines for dust detection processing. If dust exists, the cumulative added value of the corresponding pixel becomes very large. Upon calculating a cumulative added value corresponding to the required number of lines for dust detection processing, the adding circuit 2454 inputs the calculated value to the comparator 2455.

The comparator 2455 compares a dust determination level (black pixel ratio) like that shown in 7b of Fig. 7 with the cumulative added value. The comparator 2455 then tentatively determines that dust adheres at the main scanning pixel position at which a cumulative added value exceeds the dust determination level.

The AND circuit 2456 outputs, to the subsequent dust determination result generating circuit 2457, a dust determination result, obtained by using a main scanning effective interval signal, on only an interval signal portion in an effective area, of the reading area, which is used for document reading.

The main scanning pixel position generating circuit 2458 outputs a main scanning pixel position signal required to specify the main scanning position of dust by the dust determination result generating circuit 2457. The main scanning pixel position generating circuit 2458 internally holds a counter, which counts pixels to generate a main scanning pixel position signal.

The dust determination result generating circuit 2457 generates dust position information composed of the information of the main scanning position and width of dust from the dust determination result. In this case, the dust determination result generating circuit 2457 may be configured to ignore dust determination results equal to or more than (or equal to less than) a given predetermined width or not hold dust determination results equal to or more than a given predetermined number.

A dust position conversion circuit 2460 receives a result from the dust determination result generating circuit 2457, and converts dust position information in accordance with the state of the dust detection resolution change flag 2482. More specifically, when the dust detection resolution change flag is false, the dust position conversion circuit 2460 stores dust position information in the dust position determination result holding unit 2461 on the subsequent stage without converting the value. When the dust detection resolution change flag is true, the dust position conversion circuit 2460 converts the dust position information into position information matching the resolution of the document resolution holding unit 2480 based on the dust detectable resolution holding unit 2481 and the resolution information held in the document resolution holding unit 2480. The dust position conversion circuit 2460 stores the converted dust position information in the dust position determination result holding unit 2461 on the subsequent stage. With the above processing, the dust position conversion circuit 2460 can always calculate, as dust position information, a value matching a document resolution, even when the resolution for dust detection processing differs from the document resolution. With this operation, the dust detection unit 2450 can identify which pixel of a plurality of pixels included in document image data is an abnormal pixel, from the pixel positions based on the document resolution.

The dust detection unit 2450 outputs the dust position information G held in the dust position determination result holding unit 2461 to the dust correction unit 2411, which in turn uses the information to specify a correction range (black streak portion) when an image having a black streak is actually input.

In this case, the CPU 2100 may be configured to be able to refer to the dust position information G output from the dust position determination result holding unit 2461 to detect a dust detection result, and may also be configured to set dust position information in the dust correction unit 2411.

In addition, the CPU 2100 may be configured to hold a determination result in a free area in the RAM 2110 as an image memory like a cumulative added value. In this case, the dust position information G is output from the bus input/output unit 2402.

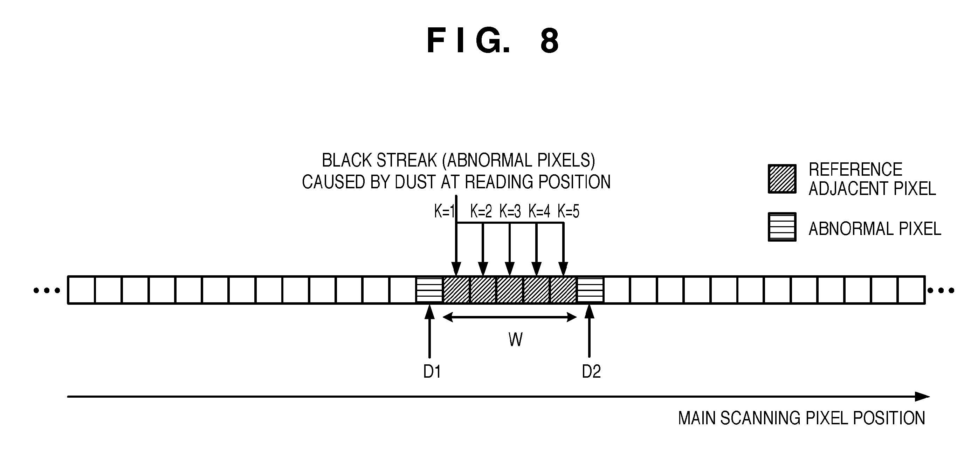

[Details of Dust Correction Processing (Fig. 8)]

Fig. 8 shows a pixel array in one line in the main scanning direction.

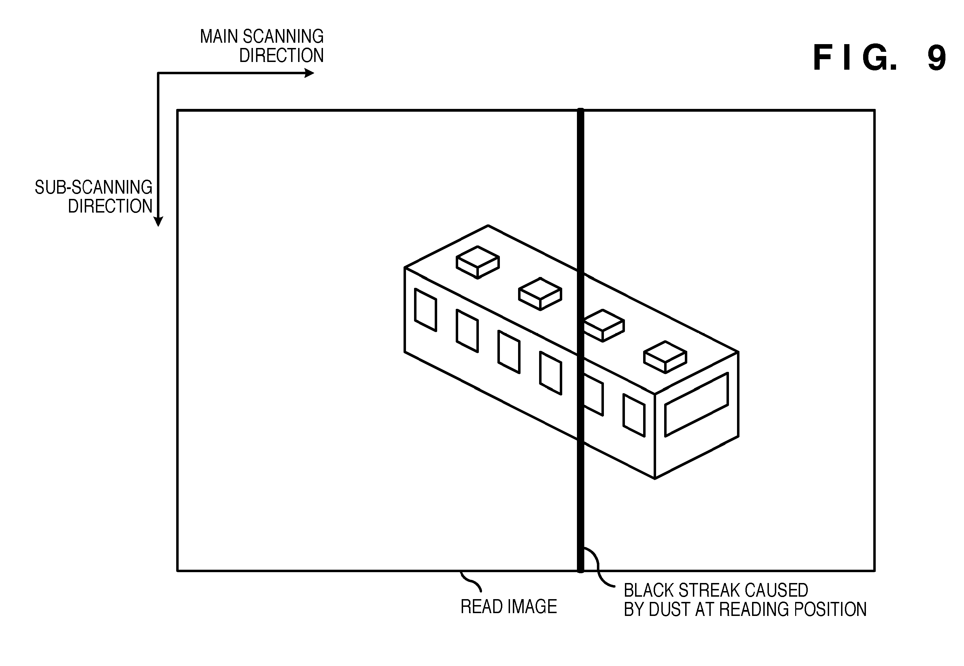

The dust correction unit 2411 performs dust correction processing by interpolating or replacing abnormal pixels as correction targets with surrounding pixels. As shown in Fig. 9, a black streak (abnormal pixels) appears with a certain width at a specific position in the main scanning direction at the time of operation in the flow scanning mode, and extends as a streak in the sub-scanning direction.

Letting Y be a correction result pixel density, D1 be a left end reference adjacent pixel density, D2 be a right end reference adjacent pixel density, K be a pixel position from a dust correction processing start position, and W be an abnormal pixel width, when executing dust correction processing by linear interpolation, the dust correction unit 2411 calculates a correction result according to the following equation:

$$Y = D1 + K/W \times (D2 - D1)$$

It is also possible to execute dust correction processing by simply replacing abnormal pixels with surrounding normal pixels (reference adjacent pixels) without performing computation.

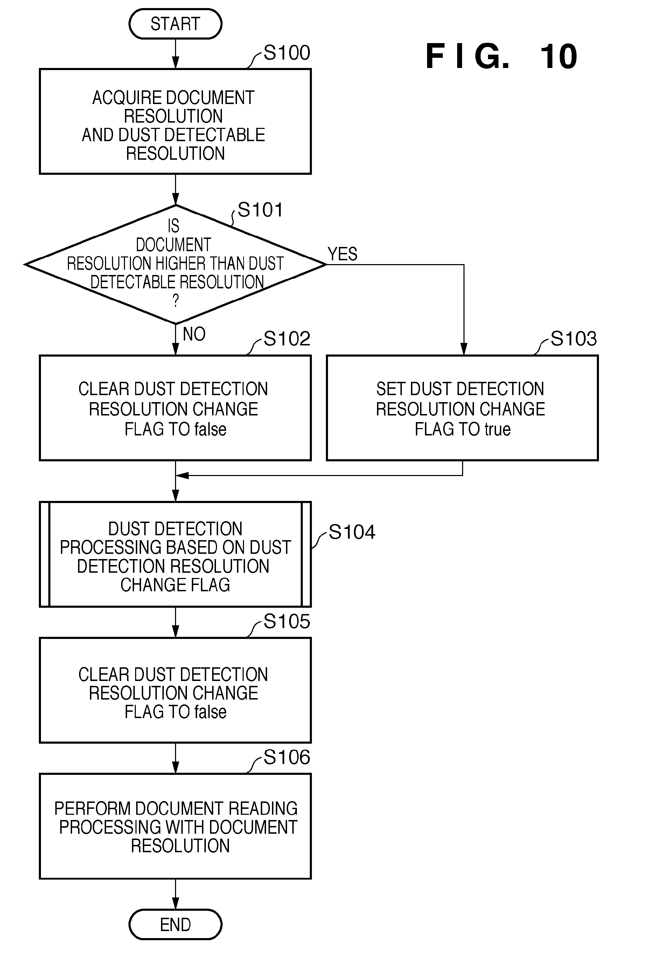

[Overall Processing Procedure for Dust Detection Processing and Document Reading Processing (Fig. 10)]

The CPU 2100 executes the following processing in accordance with programs stored in the HDD 2130. The CPU 2100 executes this processing every time one page is scanned. When scanning a plurality of pages, the CPU 2100 repeatedly executes the processing the number of times equal to the number of pages. If, for example, a document has 10 pages, the CPU 2100 executes the processing 10 times for one job.

The CPU 2100 starts executing scanning processing at the document resolution set by the user with the operation panel and held in the document resolution holding unit 2480. The value held in the document resolution holding unit 2480 is determined in advance before the start of scanning processing. Assume also that the value stored in the dust detectable resolution holding unit 2481 is determined and set in advance based on the system performance.

First of all, the CPU 2100 acquires values to be stored in the document resolution holding unit 2480 and the dust detectable resolution holding unit 2481 (S100). The CPU 2100 determines whether the document resolution is higher than the dust detectable resolution (S101). If the document resolution is equal to or more than the dust detectable resolution, the CPU 2100 clears the setting of the dust detection resolution change flag 2482 to false (S102). With this setting, the CPU 2100 has selected a document resolution for dust detection processing. If the document resolution is higher than the dust detectable resolution, the CPU 2100 sets the setting of the dust detection resolution change flag 2482 to true (S103). With this setting, the CPU 2100 has selected the dust detectable resolution for dust detection processing.

For example, if the document resolution is 600 dpi and the dust detectable resolution is 300 dpi, the process advances to step S103. In another instance, assume that the document resolution is 300 dpi and the dust detectable resolution is 300 dpi. In this case, the process advances to step S102.

The CPU 2100 performs dust detection processing in accordance with the dust detection resolution change flag (S104). A detailed processing procedure in step S104 will be described later. The CPU 2100 clears the dust detection resolution change flag to false (S105). With this processing, the CPU 2100 terminates the dust detection processing. Finally, the CPU 2100 performs document reading processing in accordance with the resolution in the document resolution holding unit 2480 (S106). The CPU 2100 then terminates the series of processing.

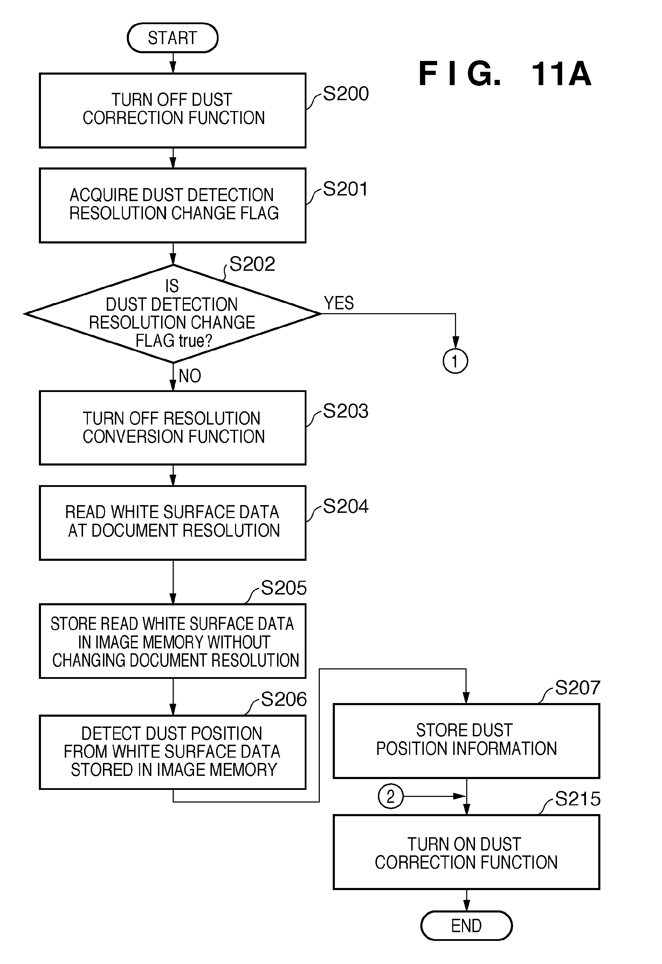

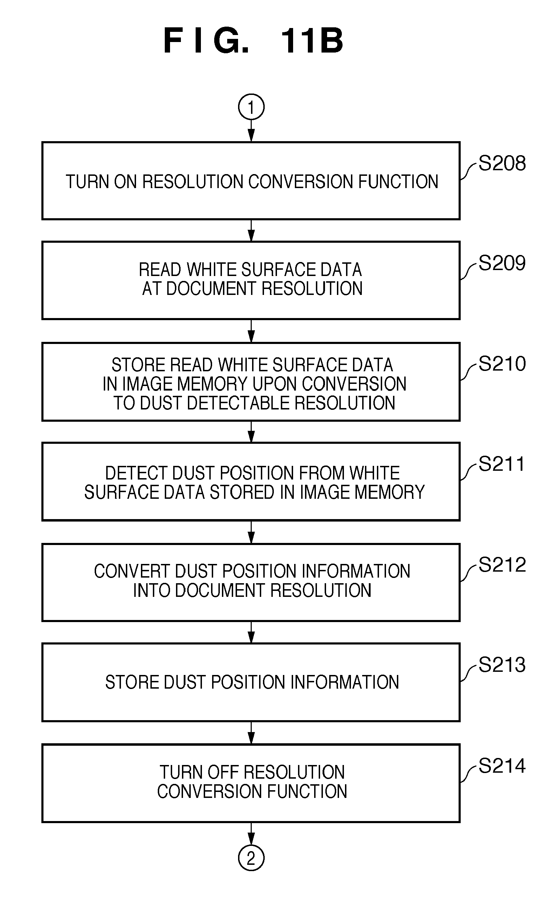

[Detailed Processing Procedure for Dust Detection Processing (S104) (Figs. 11A and 11B)]

The CPU 2100 executes the following processing in accordance with programs stored in the HDD 2130. The internal arrangement of the scanner IF image processing unit 2400 in Fig. 6 and the internal arrangement of the dust detection unit 2450 in Fig. 7 will be described below in comparison with each other.

First of all, the CPU 2100 turns off the dust correction function of the dust correction unit 2411 (S200). The CPU 2100 performs this operation to store an image without any dust correction as a dust detection image in the image memory. The CPU 2100 then acquires the dust detection resolution change flag 2482 (S201).

The CPU 2100 determines whether the dust detection resolution change flag is true (S202). If the flag is false, the process advances to the processing in steps S203 to S207 so as to proceed with the processing without changing the dust detection resolution from the document resolution.

First of all, the CPU 2100 turns off the resolution conversion function of the resolution conversion unit 2413 (S203). The dust detection resolution indicates that the CPU 2100 proceeds with the processing without changing the setting in the document resolution holding unit 2480. The CPU 2100 starts reading the white surface at the document resolution (S204). The white surface is the white surface on the driving roller 1401. In this case, the optical system is fixed at the position indicated by 2b of Fig. 2, and the CPU 2100 reads the white surface by capturing reflected light via the CCD sensor 1407 before conveying the document 100. The CPU 2100 then stores the white surface data input at the document resolution in the RAM 2110 as an image memory (S205). The CPU 2100 performs storage processing via the bus input/output unit 2402 by using the DMAC 2420. The CPU 2100 inputs the white surface data stored in the RAM 2110 as an image memory to the dust detection unit 2450, and detects a dust position (abnormal pixel position) (S206). With this processing, dust position information at the document resolution is determined. The details of dust detection processing will be described with reference to Fig. 7. The CPU 2100 stores the dust position information generated by the dust determination result generating circuit 2457 in the dust position determination result holding unit 2461 without any change (S207).

If the CPU 2100 determines in step S202 that the flag is true, the process advances to the processing in steps S208 to S214 so as to change the dust detection resolution.

First of all, the CPU 2100 turns on the resolution conversion function of the resolution conversion unit 2413 (S208). This function makes magnification setting so as to convert the dust detection resolution into the resolution held in the dust detectable resolution holding unit 2481. If, for example, the document resolution is 600 dpi and the dust detectable resolution is 300 dpi, the CPU 2100 sets a conversion setting of 1/2 to convert the resolution of the output image to 1/2 that of the input image to the resolution conversion unit. This indicates that the CPU 2100 proceeds with the dust detection processing with the setting in the dust detectable resolution holding unit 2481.

The CPU 2100 then starts reading the white surface at the document resolution (S209). The white surface is the white surface on the driving roller 1401. In this case, the CPU 2100 fixes the optical system at the position indicated by 2b of Fig. 2, and captures reflected light via the CCD sensor 1407 before conveying the document 100, thereby reading the white surface.

The CPU 2100 then stores white surface data, whose resolution has been converted from the document resolution to the dust detectable resolution by the resolution conversion unit 2413, in the RAM 2110 as an image memory (S210). In this case, the CPU 2100 performs storage processing via the bus input/output unit 2402 using the DMAC 2420.

The CPU 2100 detects a dust position by inputting the white surface data stored in the RAM 2110 to the dust detection unit 2450 (S211). This operation determines dust position information at the dust detectable resolution. The details of dust detection processing are the same as those described with reference to Fig. 7. The dust position conversion circuit 2460 then converts the resolution of the dust position information into the document resolution (S212). That is, the dust position conversion circuit 2460 performs the processing of converting the dust position information with the dust detectable resolution generated by the dust determination result generating circuit 2457 into dust position information at the document resolution. If, for example, the dust detectable resolution is 300 dpi and the document resolution is 600 dpi, the dust position conversion circuit 2460 doubles the number of pixels represented by the dust position information.

The dust position determination result holding unit 2461 then stores the dust position information generated by the dust determination result generating circuit 2457 and converted by the dust position conversion circuit 2460 (S213). The CPU 2100 turns off the resolution conversion function of the resolution conversion unit 2413 (S214).

After the processing in step S207 or S214, the CPU 2100 turns on the dust correction function of the dust correction unit 2411 (S215), and terminates the series of processing.

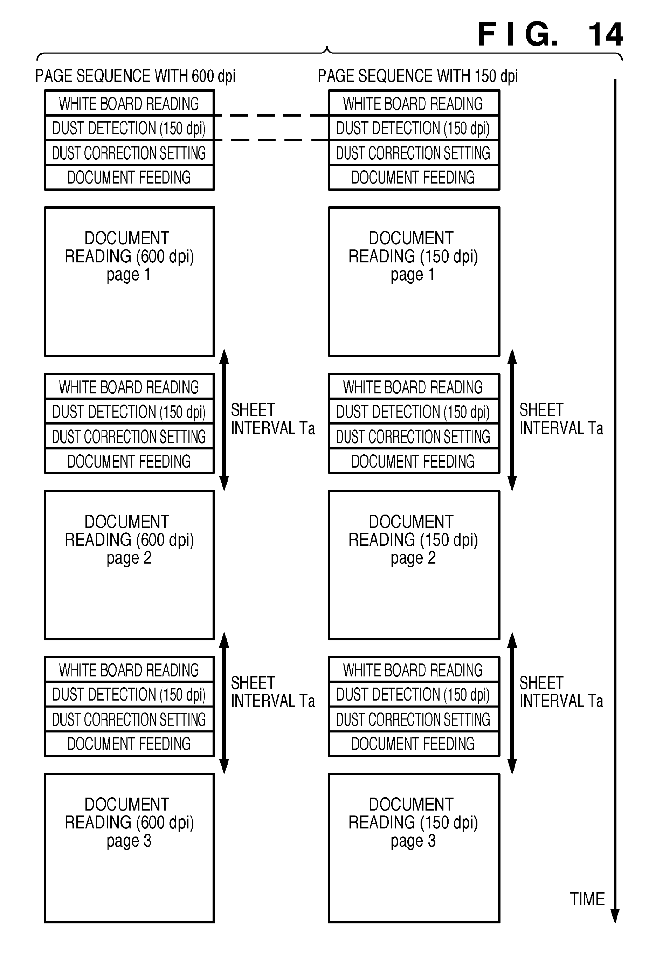

As described above, according to the first embodiment, the number of pixels of a dust detection processing target is suppressed to a predetermined number or fewer regardless of the document reading resolution setting. This can maintain the performance of copying processing by shortening the time required for dust detection processing and keeping the sheet conveying interval within a predetermined length of time. Fig. 14 shows a concrete example of how the problem is solved. Referring to Fig. 14, the sheet conveying interval is kept within a predetermined length of time by performing dust detection processing at a low resolution for a document with a high resolution and equalizing the time required for dust detection processing.

<Second Embodiment>

The first embodiment described above is configured to sequentially perform processing without any distinction between the storage destination of dust detection images which are stored in the image memory and the storage destination of document images. In contrast to this, the second embodiment is configured to link document detection states to the storage destinations of images to improve the throughput when consecutively reading document sheets. The differences from the first embodiment will be described below.

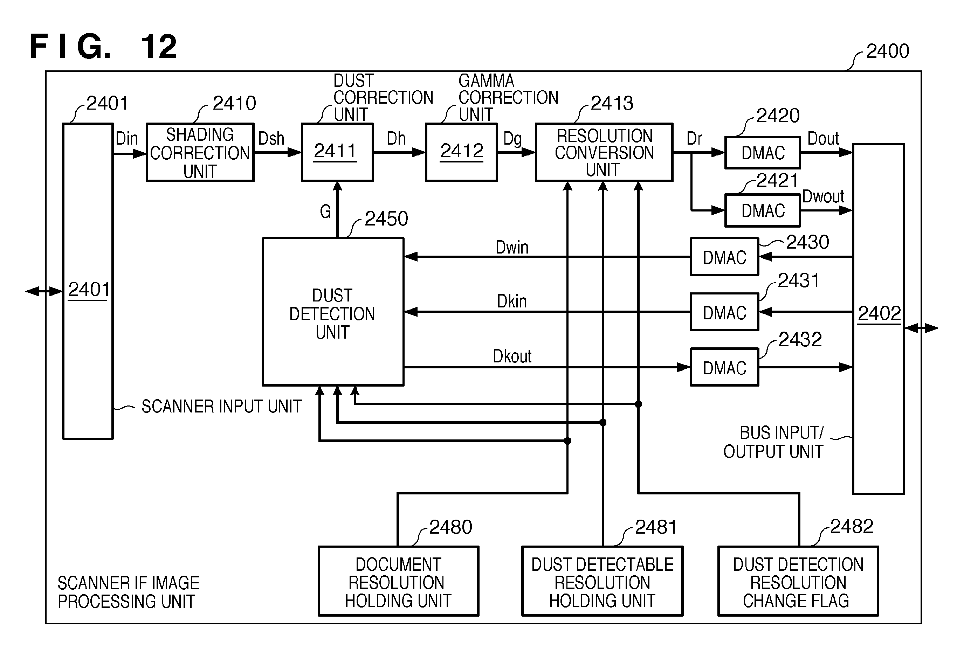

[Detailed Arrangement of Scanner IF Image Processing Unit (Fig. 12)]

The difference between the scanner IF image processing unit (see Fig. 5) of the first embodiment and of the second embodiment is that the second embodiment includes an additional DMAC 2421. The DMAC 2421 (second data transfer control means) is a DMAC specialized for control of the storage of dust detection images. The second embodiment is configured to store document detection images in an image memory 2110 by using a DMAC 2420 and store dust detection images in the memory by using the DMAC 2421. This embodiment continuously performs storage of dust detection images and storage of document images by setting the storage destination addresses of the respective DMACs in advance. Whether to use the DMAC 2420 or 2421 is determined in accordance with the detection state of a document sensor 1420 described with reference to 2b of Fig. 2.

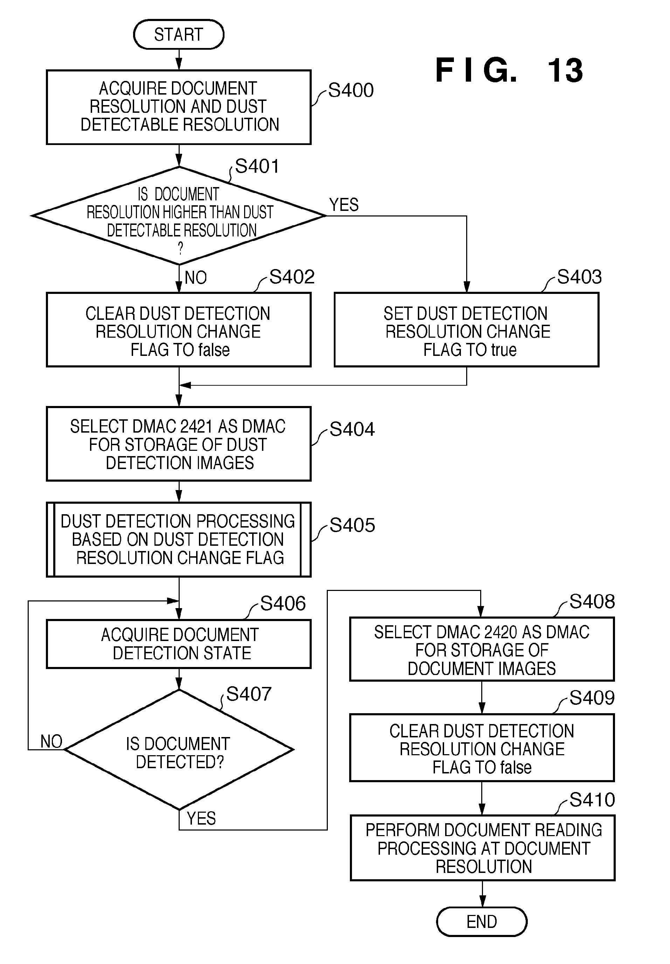

[Overall Processing Procedure for Dust Detection Processing and Document Reading Processing (Fig. 13)]

A CPU 2100 executes the following processing in accordance with programs stored in an HDD 2130. The CPU 2100 executes this processing every time one page is scanned. When scanning a plurality of pages, the CPU 2100 repeatedly executes the processing by a number of times equal to the number of pages. If, for example, a document has 10 pages, the CPU 2100 executes the processing 10 times for one job.

The CPU 2100 starts executing scanning processing at the document resolution set by the user with the operation panel. The value held in a document resolution holding unit 2480 is determined in advance before the start of scanning processing. The value stored in a dust detectable resolution holding unit 2481 is determined and set in advance based on the system performance.

The difference from the first embodiment is that the CPU 2100 switches the DMACs to be used for image storage. Since this embodiment is configured to make settings for the storage of dust detection images and the storage of document images, it is possible to continuously process one page.

First of all, the CPU 2100 acquires values to be stored in the document resolution holding unit 2480 and the dust detectable resolution holding unit 2481 (S400). The CPU 2100 then determines whether the document resolution is higher than the dust detectable resolution (S401). If the document resolution is equal to or less than the dust detectable resolution (detection resolution), the CPU 2100 clears a dust detection resolution change flag 2482 to false (S402). With this setting, the CPU 2100 has selected the document resolution for dust detection processing. In contrast, if the document resolution is higher than the dust detectable resolution, the CPU 2100 sets the dust detection resolution change flag 2482 to true (S403). With this setting, the CPU 2100 has selected the dust detectable resolution for dust detection processing.

If, for example, the document resolution is 600 dpi and the dust detectable resolution is 300 dpi, the process advances to step S403. If the document resolution is 300 dpi and the dust detectable resolution is also 300 dpi, the process advances to step S402.

The CPU 2100 then selects the DMAC 2421 for the storage of dust detection images as the image storage DMAC (S404). The CPU 2100 performs dust detection processing in accordance with the dust detection resolution change flag (S405). The details of this processing are the same as those described with reference to Figs. 11A and 11B.

The CPU 2100 then acquires the document detection state of the document sensor 1420 (S406). The CPU 2100 determines, based on the acquired document detection state, whether the document sensor has detected a document (S407). If the sensor has not detected document, the process returns to step S406 to wait for the conveyance of a document to be read. If the sensor has detected a document, the CPU 2100 selects the DMAC 2420 for the storage of document images as an image storage DMAC (S408).

The CPU 2100 then clears the dust detection resolution change flag to false (S409). With this processing, the CPU 2100 terminates the dust detection processing. Finally, the CPU 2100 reads the document in accordance with the resolution in the document resolution holding unit 2480 (S410), and terminates the series of processing.

Note that the first and second embodiments described above have exemplified the dust detection processing and correction processing in the flow scanning mode (continuous reading) which allows consecutive reading of a plurality of automatically conveyed document sheets. However, the present invention can also be applied to the normal reading mode of reading a document placed on the document table by the user.

In addition, in the first and second embodiments described above, the image reading apparatus performs both dust detection processing and correction processing. However, the present invention is configured to at least convert the resolution of image data from a reading resolution to a resolution for dust detection to perform dust detection processing, and hence may make an external apparatus perform dust detection processing and correction processing.

(Other Embodiments)

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image reading apparatus (140, 120) configured to read an automatically conveyed document at a set reading resolution and to output image data of the document, the apparatus comprising:

   image reading means (140) for performing a reading operation and for outputting image data with a resolution corresponding to the reading resolution in accordance with reflected light;
   conversion means (2413) for, in a case that the reading resolution is higher than a resolution for abnormal pixel detection, converting image data with a resolution corresponding to the reading resolution into image data with the resolution for abnormal pixel detection;
   detection means (2450) for detecting an abnormal pixel in accordance with the image data converted by said conversion means (2413); and
   correction means (2411) for correcting a pixel of pixels included in the image data of the document read by said image reading means (140), which corresponds to a position of an abnormal pixel detected by said detection means (2450).

2. The apparatus according to claim 1, further comprising control means for performing control to repeat detection of an abnormal pixel by said detection means and correction of a pixel by said correction means by the number of times that corresponds to the number of document sheets to be read.

3. The apparatus according to claim 1 or claim 2, wherein said conversion means (2413) is configured to convert image data with the resolution corresponding to the reading resolution into image data with the resolution for abnormal pixel detection during a conveying interval of document sheets in a case that a plurality of the document sheets are consecutively read.

4. The apparatus according to any preceding claim, wherein said detection means (2450) detects the abnormal pixel by cumulatively adding each pixel value of the image data converted by said conversion means in a sub-scanning direction.

5. The apparatus according to any preceding claim, further comprising quantization means for quantizing image data converted by said conversion means and stored in an image memory into a plurality of levels, wherein said detection means detects the abnormal pixel by cumulatively adding each level of the image data quantized by said quantization means in the sub-scanning direction.

6. The apparatus according to any preceding claim, further comprising
   document detection means (1420) for detecting that a document exists on a platen glass,
   first data transfer control means for transferring image data of the document converted by said conversion means (2413) to a predetermined address in an image memory when said document detection means detects existence of the document, and
   second data transfer control means for transferring image data for abnormal pixel detection, output from said conversion means (2413), to a predetermined address different from the address in the image memory, when said document detection means detects no document.

7. A control method for an image reading apparatus which reads an automatically conveyed document at a set reading resolution and outputs image data of the document, the method comprising:

   reading (S204) an image and outputting image data with a resolution corresponding to the reading resolution in accordance with reflected light;
   converting (S210), when the reading resolution is higher than a resolution for abnormal pixel detection, the image data with the resolution corresponding to the reading resolution into image data with the resolution for abnormal pixel detection;
   detecting (S211) an abnormal pixel in accordance with the converted image data; and
   correcting a pixel (S215) of pixels included in the image data of the read document, which corresponds to a position of the detected abnormal pixel.

8. A program for causing a computer to execute a control method for an image reading apparatus defined in claim 7.

9. A storage medium storing the program according to claim 8.

# F I G. 1

EP 2 348 701 A2

# F I G. 3

# FIG. 4

EP 2 348 701 A2

# FIG. 5

# FIG. 6

G ⟋2450

DUST DETECTION UNIT

DUST POSITION
DETERMINATION RESULT
HOLDING UNIT
2461

DOCUMENT
RESOLUTION
HOLDING UNIT

2480

DUST POSITION
CONVERSION
CIRCUIT
2460

2481

2482

DUST
DETECTION
RESOLUTION
CHANGE FLAG

DUST
DETECTABLE
RESOLUTION
HOLDING UNIT

DUST
DETERMINATION
LEVEL

2455    2456

A
A ≥ B
B

2457

DUST
DETERMINATION
RESULT GENERATING
CIRCUIT

CUMULATIVE
ADDED VALUE

MAIN SCANNING
PIXEL POSITION
GENERATING CIRCUIT

EFFECTIVE INTERVAL
SIGNAL IN MAIN SCANNING

2458

FILTER CIRCUIT   2452

2451

BINARIZATION
CIRCUIT

BINARIZATION
SLICE LEVEL

2453

SYNCHRONIZ-
ING
CIRCUIT

2454

Dkout

2432

DMAC

Dkin

2431

DMAC

Dwin

2430

DMAC

# F I G. 7

PIXEL SIGNAL
LEVEL

7a

BINARIZATION
SLICE LEVEL

MAIN SCANNING PIXEL POSITION

CUMULATIVE
ADDED VALUE

7b

DUST
DETERMINATION
LEVEL

MAIN SCANNING PIXEL POSITION

# F I G. 8

EP 2 348 701 A2

BLACK STREAK (ABNORMAL PIXELS)
CAUSED BY DUST AT READING POSITION

K=1  K=2  K=3  K=4  K=5

REFERENCE
ADJACENT PIXEL

ABNORMAL PIXEL

D1    W    D2

MAIN SCANNING PIXEL POSITION

**F I G. 9**

MAIN SCANNING DIRECTION

SUB-SCANNING DIRECTION

READ IMAGE

BLACK STREAK CAUSED BY DUST AT READING POSITION

EP 2 348 701 A2

**F I G. 10**

START

↓ S100

ACQUIRE DOCUMENT
RESOLUTION
AND DUST DETECTABLE
RESOLUTION

↓

S101

IS
DOCUMENT
RESOLUTION HIGHER THAN DUST
DETECTABLE RESOLUTION
?

— YES →

S103

SET DUST DETECTION
RESOLUTION CHANGE
FLAG TO true

NO ↓

S102

CLEAR DUST DETECTION
RESOLUTION CHANGE
FLAG TO false

↓

S104

DUST DETECTION
PROCESSING BASED ON DUST
DETECTION RESOLUTION
CHANGE FLAG

↓ S105

CLEAR DUST DETECTION
RESOLUTION CHANGE
FLAG TO false

↓ S106

PERFORM DOCUMENT READING
PROCESSING WITH DOCUMENT
RESOLUTION

↓

END

# FIG. 11A

START

TURN OFF DUST
CORRECTION FUNCTION — S200

ACQUIRE DUST DETECTION
RESOLUTION CHANGE FLAG — S201

S202

IS
DUST DETECTION
RESOLUTION CHANGE
FLAG true? → YES → ①

NO

TURN OFF RESOLUTION
CONVERSION FUNCTION — S203

READ WHITE SURFACE DATA
AT DOCUMENT RESOLUTION — S204

S205

STORE READ WHITE SURFACE DATA
IN IMAGE MEMORY WITHOUT
CHANGING DOCUMENT RESOLUTION

S206

DETECT DUST POSITION
FROM WHITE SURFACE DATA
STORED IN IMAGE MEMORY

STORE DUST
POSITION INFORMATION — S207

② →

TURN ON DUST
CORRECTION FUNCTION — S215

END

# F I G. 11B

(1)

| | |
|---|---|
| TURN ON RESOLUTION CONVERSION FUNCTION | S208 |

| | |
|---|---|
| READ WHITE SURFACE DATA AT DOCUMENT RESOLUTION | S209 |

| | |
|---|---|
| STORE READ WHITE SURFACE DATA IN IMAGE MEMORY UPON CONVERSION TO DUST DETECTABLE RESOLUTION | S210 |

| | |
|---|---|
| DETECT DUST POSITION FROM WHITE SURFACE DATA STORED IN IMAGE MEMORY | S211 |

| | |
|---|---|
| CONVERT DUST POSITION INFORMATION INTO DOCUMENT RESOLUTION | S212 |

| | |
|---|---|
| STORE DUST POSITION INFORMATION | S213 |

| | |
|---|---|
| TURN OFF RESOLUTION CONVERSION FUNCTION | S214 |

(2)

# FIG. 12

EP 2 348 701 A2

**F I G. 13**

START

ACQUIRE DOCUMENT
RESOLUTION AND DUST
DETECTABLE RESOLUTION ⎯ S400

IS DOCUMENT
RESOLUTION HIGHER THAN DUST
DETECTABLE RESOLUTION
? ⎯ S401

YES → SET DUST DETECTION
RESOLUTION CHANGE
FLAG TO true ⎯ S403

NO

CLEAR DUST DETECTION
RESOLUTION CHANGE
FLAG TO false ⎯ S402

SELECT DMAC 2421 AS DMAC
FOR STORAGE OF DUST
DETECTION IMAGES ⎯ S404

DUST DETECTION PROCESSING
BASED ON DUST DETECTION
RESOLUTION CHANGE FLAG ⎯ S405

ACQUIRE DOCUMENT
DETECTION STATE ⎯ S406

IS DOCUMENT
DETECTED? ⎯ S407

NO

YES

SELECT DMAC 2420 AS DMAC
FOR STORAGE OF
DOCUMENT IMAGES ⎯ S408

CLEAR DUST DETECTION
RESOLUTION CHANGE
FLAG TO false ⎯ S409

PERFORM DOCUMENT READING
PROCESSING AT DOCUMENT
RESOLUTION ⎯ S410

END

# F I G. 14

PAGE SEQUENCE WITH 600 dpi          PAGE SEQUENCE WITH 150 dpi

| WHITE BOARD READING |
| DUST DETECTION (150 dpi) |
| DUST CORRECTION SETTING |
| DOCUMENT FEEDING |

| WHITE BOARD READING |
| DUST DETECTION (150 dpi) |
| DUST CORRECTION SETTING |
| DOCUMENT FEEDING |

DOCUMENT
READING (600 dpi)
page 1

DOCUMENT
READING (150 dpi)
page 1

| WHITE BOARD READING |
| DUST DETECTION (150 dpi) |
| DUST CORRECTION SETTING |
| DOCUMENT FEEDING |

SHEET
INTERVAL Ta

| WHITE BOARD READING |
| DUST DETECTION (150 dpi) |
| DUST CORRECTION SETTING |
| DOCUMENT FEEDING |

SHEET
INTERVAL Ta

DOCUMENT
READING (600 dpi)
page 2

DOCUMENT
READING (150 dpi)
page 2

| WHITE BOARD READING |
| DUST DETECTION (150 dpi) |
| DUST CORRECTION SETTING |
| DOCUMENT FEEDING |

SHEET
INTERVAL Ta

| WHITE BOARD READING |
| DUST DETECTION (150 dpi) |
| DUST CORRECTION SETTING |
| DOCUMENT FEEDING |

SHEET
INTERVAL Ta

DOCUMENT
READING (600 dpi)
page 3

DOCUMENT
READING (150 dpi)
page 3

TIME

# F I G. 15

**PAGE SEQUENCE WITH 600 dpi**  |  **PAGE SEQUENCE WITH 150 dpi**

| WHITE BOARD READING |
| DUST DETECTION |
| DUST CORRECTION SETTING |
| DOCUMENT FEEDING |

ADDITIONAL TIME Td

| WHITE BOARD READING |
| DUST DETECTION |
| DUST CORRECTION SETTING |
| DOCUMENT FEEDING |

DOCUMENT READING page 1

DOCUMENT READING page 1

| WHITE BOARD READING |
| DUST DETECTION |
| DUST CORRECTION SETTING |
| DOCUMENT FEEDING |

ADDITIONAL TIME Td

SHEET INTERVAL Tb=Ta+Td

| WHITE BOARD READING |
| DUST DETECTION |
| DUST CORRECTION SETTING |
| DOCUMENT FEEDING |

SHEET INTERVAL Ta

DOCUMENT READING page 2

DOCUMENT READING page 2

| WHITE BOARD READING |
| DUST DETECTION |
| DUST CORRECTION SETTING |
| DOCUMENT FEEDING |

ADDITIONAL TIME Td

SHEET INTERVAL Tb=Ta+Td

| WHITE BOARD READING |
| DUST DETECTION |
| DUST CORRECTION SETTING |
| DOCUMENT FEEDING |

SHEET INTERVAL Ta

DOCUMENT READING page 3

DOCUMENT READING page 3

TIME

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002185725 A
- JP 2005269353 A